Europäisches Patentamt

European Patent Office

Office européen des brevets

(11) Veröffentlichungsnummer : **0 168 383 B2**

# (12) NEUE EUROPÄISCHE PATENTSCHRIFT

(45) Veröffentlichungstag der neuen Patentschrift :
27.02.91 Patentblatt 91/09

(21) Anmeldenummer : 83903519.3

(22) Anmeldetag : 15.11.83

(86) Internationale Anmeldenummer :
PCT/EP83/00301

(87) Internationale Veröffentlichungsnummer :
WO 84/03674 27.09.84 Gazette 84/23

(51) Int. Cl.$^5$ : **B62D 5/06**

(54) **HYDRAULISCHE HILFSKRAFTLENKUNG FÜR KRAFTFAHRZEUGE.**

(30) Priorität : 23.03.83 PCT/EP83/00088

(43) Veröffentlichungstag der Anmeldung :
22.01.86 Patentblatt 86/04

(45) Bekanntmachung des Hinweises auf die
Patenterteilung :
04.03.87 Patentblatt 87/10

(45) Bekanntmachung des Hinweises auf die
Entscheidung über den Einspruch :
27.02.91 Patentblatt 91/09

(84) Benannte Vertragsstaaten :
DE FR GB

(56) Entgegenhaltungen :
DE-A- 2 535 318
DE-A- 2 857 342
DE-C- 2 514 624

(56) Entgegenhaltungen :
FR-A- 2 366 974
GB-A- 2 001 287
US-A- 3 838 570
US-A- 4 142 842
US-A- 4 184 560

(73) Patentinhaber : ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder : LIEBERT, Karl-Heinz
Dahlienweg 4
D-7070 Schwäbisch Gmünd (DE)
Erfinder : WIEDEMANN, Erwin
Strassdorfer Berg 4
D-7070 Schwäbisch Gmünd (DE)

(74) Vertreter : Raue, Reimund
Zahnradfabrik Friedrichshafen AG Löwentaler
Strasse 100 Postfach 2520
D-7990 Friedrichshafen 1 (DE)

EP 0 168 383 B2

## Beschreibung

Eine Hilfskraftlenkung nach dem Oberbegriff des Patentanspruches, die mit einer ersten und einer zweiten Pumpe arbeitet, ist z. B. aus der DE-PS-27 31 975 bekannt. Ein Zweipumpenbetrieb ist vom Gesetzgeber immer dann vorgeschrieben, wenn schwere Kraftfahrzeuge infolge Ausfalls der ersten Pumpe unlenkbar würden. In diesem Falle kann ein Fahrzeug mit der beispielsweise von der Getriebeausgangswelle angetriebenen zweiten Pumpe (Notlenkpumpe) bei rollendem Fahrzeug sicher aus dem Verkehr gezogen werden. Die bekannte Hilfskraftlenkeinrichtung weist ein sogenanntes Zuschaltventil auf, welches bei einem Defekt der ersten Pumpe diese vom hydraulischen Lenkkreis trennt und die Notlenkpumpe zuschaltet. Ist die erste Pumpe voll betriebsfähig, so wälzt die Notlenkpumpe im Wartebetrieb ein zur Aufrechterhaltung des Hydraulikkreises erforderliches Ölvolumen mit einem bestimmten Leerlaufdruck um. Da ein Ausfall der ersten Pumpe während der Betriebszeit eines Fahrzeugs nur sehr selten vorkommt, bedeutet der fortdauernde Wartebetrieb der Notlenkpumpe ein ständiger Energieverlust.

Der Erfindung liegt daher die Aufgabe zugrunde, für schwere Fahrzeuge, die mit einem großen hydraulischen Arbeitsvolumen arbeiten, einen besser ausgenutzten und daher energiesparenden Zweipumpenbetrieb zu schaffen

Diese Aufgabe ist durch die im Kennzeichen von Anspruch 1 enthaltenen Merkmale gelöst.

Nach der Erfindung ist die motorabhängige erste Pumpe eine Verstellpumpe. Des weiteren ist der Öffnungsquerschnitt der Zulaufsteuerkanten des Lenkventils in der Neutralstellung so ausgelegt, daß bei dem für Notlenkbetrieb erforderlichen Förderstrom der Notlenkpumpe die Verstellpumpe abgeregelt wird. Zur Regelung der Verstellpumpe ist außerdem ein zwischen die Druckleitungen des Arbeitszylinders eingebautes Abwägeventil vorgesehen, welches die jeweils wirksame Druckseite des Arbeitszylinders mit dem den Hubraum der Verstellpumpe bestimmenden Verstellglied verbindet. Die Notlenkpumpe stellt bereits bei geringer Fahrgeschwindigkeit einen für die Versorgung der Lenkeinrichtung ausreichenden Förderstrom bereit, sofern nur langsame Lenkbewegungen zur Fahrtrichtungskorrektur vorgenommen werden. In diesem Falle ist durch den am Lenkventil festgelegten Öffnungsquerschnitt der Zulaufsteuerkanten ein Durchlaufdruck eingestellt, der das Verstellglied der Verstellpumpe auf Nullhub regelt. Im normalen Arbeitsbereich der Hilfskraftlenkung, wenn das Fahrzeug mit mittleren und höheren Geschwindigkeiten fährt, deckt die einen konstanten Ölstrom liefernde Notlenkpumpe den benötigten Förderstrom alleine ab, d. h. die Verstellpumpe ist in Abregelstellung (Nullhub). Werden jedoch bei geringen Fahrgeschwindigkeiten enge Kurven befahren, dann entsteht im Arbeitszylinder ein hoher Ölstrombedarf, der von der Notlenkpumpe nicht mehr alleine aufgebracht werden kann. Infolge der hohen Strömungsgeschwindigkeit zum Arbeitszylinder entsteht am Verstellglied der Verstellpumpe ein Druckabfall. Je nach Höhe dieses Druckabfalles wird das Verstellglied in Richtung Hubvergrößerung mehr oder weniger ausgeschwenkt, so daß eine zusätzliche Fördermenge zur Verfügung steht. Die Verstellpumpe wird also zur Ölstromversorgung dann mit herangezogen, wenn die Fahrzustände ein großes hydraulisches Arbeitsvolumen erforderlich machen. Steigt der Druck im Arbeitszylinder an, so wird der jeweils beaufschlagte Druckraum über das Abwägeventil mit der Steuerleitung der Verstellpumpe verbunden, deren Verstellglied die Regelung bewirkt.

Die vom Fahrzeugmotor angetriebene Verstellpumpe liefert den benötigten Förderstrom im Stand des Fahrzeugs oder bei sehr kleiner Fahrgeschwindigkeit, solange die von der Fahrzeuggeschwindigkeit abhängige Notlenkpumpe keinen oder keinen ausreichend großen Pilotstrom liefern kann.

Durch das Merkmal des Anspruches 2 ist eine kontinuierliche Förderstromregelung der Verstellpumpe gesichert, so daß diese keine Regelsprünge macht.

Die beschriebene Anordnung hat den Vorteil, daß beide Pumpen für die Ölversorgung der Hilfskraftlenkung genutzt werden. Da die Verstellpumpe nur zur Deckung des Spitzenbedarfs benötigt wird, kann diese kleiner ausgelegt werden. Die bei bekannten Hilfskraftlenkungen sonst nur leerlaufende Notlenkpumpe erhält in der erfindungsgemäßen Anordnung eine zusätzliche Arbeitsfunktion. Hieraus ergibt sich außerdem die Möglichkeit, die ständige Einsatzbereitschaft bzw, den Verschleißzustand der Notlenkpumpe mittels einer Anzeige (Druck und Menge) zu überwachen. Die erfindungsgemäße Hilfskraftlenkung ist gegenüber dem Stand der Technik einfach aufgebaut und benötigt weniger Bauteile.

Nachfolgend ist anhand der Zeichnung ein Ausführungsbeispiel der Erfindung näher erläutert. Es zeigen :

Figur 1 ein Ölschema einer Hilfskraftlenkung mit einem vereinfachten Teilschnitt durch ein Lenkventil ;

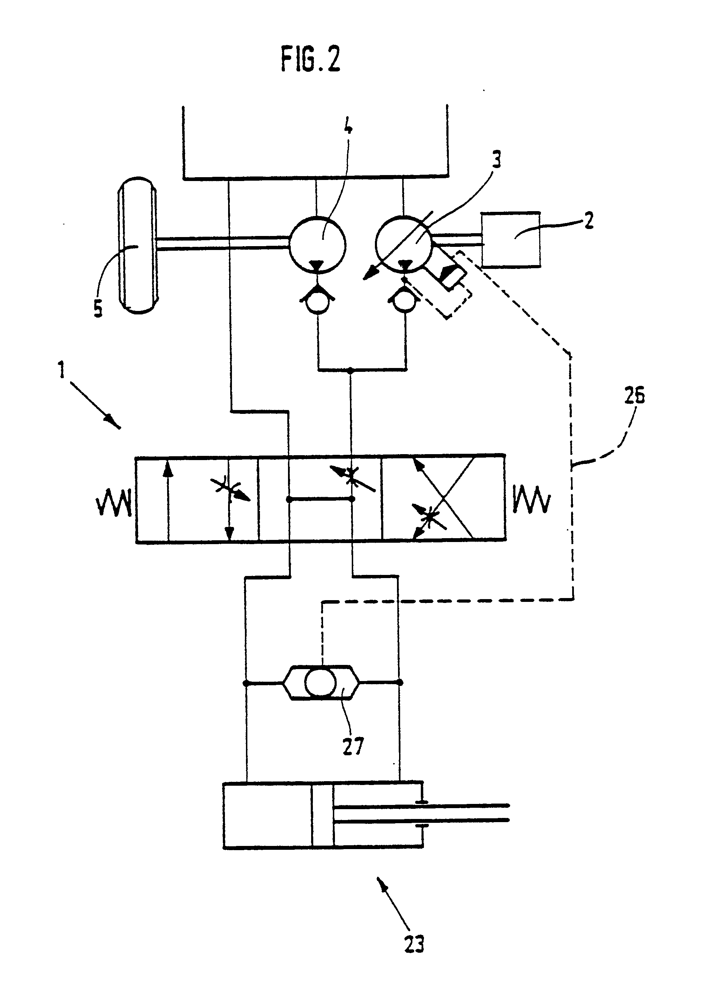

Figur 2 das Ölschema nach Fig. 1, jedoch mit einer sinnbildlichen Darstellung des Lenkventils.

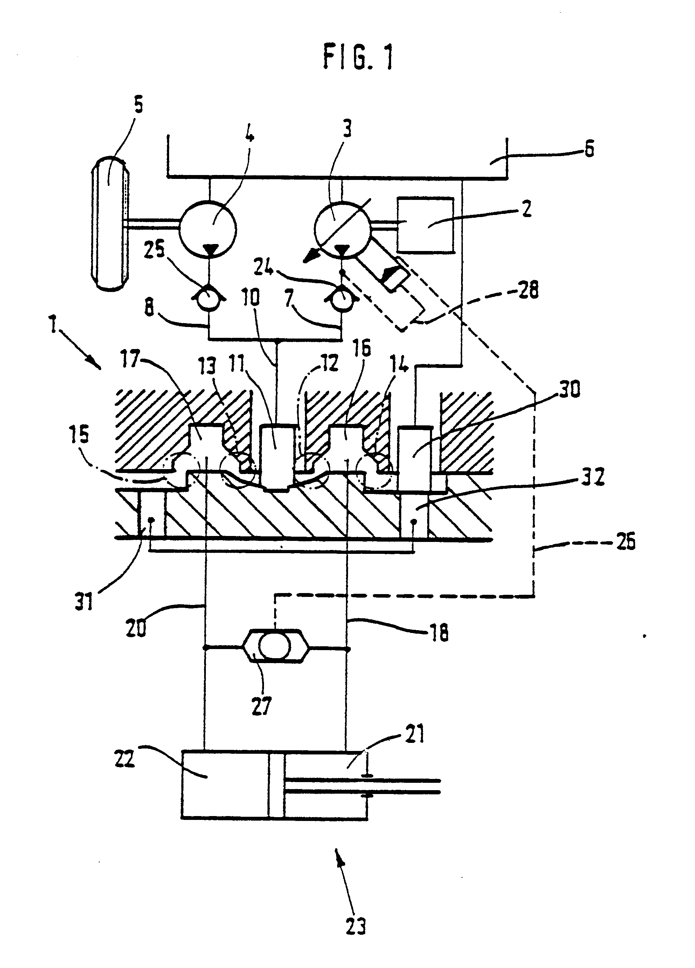

In Fig. 1 ist ein nicht dargestelltes Lenkhandrad mit einem z. B. als Axialschieberventil ausgebildeten Lenkventil 1 verbunden, welches in bekannter Weise durch die Lenkbewegung synchron verstellt wird. An das Lenkventil 1 ist eine durch einen Antriebsmotor 2 angetriebene erste Pumpe 3 und eine zweite, fahrabhängig angetriebene Pumpe 4 angeschlossen. Die zweite Pumpe 4, nachfolgend auch Notlenkpumpe genannt, ist mit einer Getriebeausgangswelle oder, wie durch das Rad 5 angedeutet, mit einem Achsantrieb gekuppelt und liefert einen konstanten oder mit der Fahrgeschwindigkeit linear ansteigenden Ölstrom. Beide Pumpen 3 und 4 saugen aus einem Behälter 6 Drucköl an und fördern dieses über Leitungszweige 7 und 8 und eine gemeinsame Druckleitung 10 in eine Zulaufnut 11 des Lenkventils 1. In der dargestellten Neutralstellung des Lenkventils 1 steht die Zulaufnut 11 über offene Zulaufsteuerkanten 12, 13 und offene Rücklaufsteuerkanten 14, 15 mit dem Behälter 6 in Verbindung. Zwischen den Zu- und Rücklaufsteuerkanten liegen Zylindernuten 16, 17, die über Zylinderleitungen 18, 20 mit Druckräumen 21, 22 eines Arbeitszylinders 23 verbunden sind. In die Leitungszweige 7 und 8 sind Rückschlagventile 24 bzw. 25 eingebaut, deren Funktion später noch näher erläutert wird.

Nach der Erfindung ist die motorabhängige Pumpe 3 als hubverstellbare Verdrängerpumpe ausgeführt. Eine verstellbare Verdrängerpumpe liefert durch ein Steuersignal nur den Förderstrom, der für einen Bewegungsvorgang, z. B. eines Arbeitszylinders, benötigt wird. Wenn der Bewegungsvorgang abgeschlossen ist, d. h., falls kein Förderstrom gebraucht wird, werden Verdrängerzellen durch ein hydraulisch gegen Federkraft verschiebbares Verstellglied (z. B. eine Schwenkscheibe einer Axialkolbenpumpe) auf Nullhubbetrieb verstellt. Es werden dann nur noch die Leckverluste des Systems ausgeglichen und der Steuerdruck (Stand-by-Druck) konstant gehalten. Einzelheiten über den Aufbau und die Wirkungsweise solcher Verdrängerpumpen sind z. B. der DE-PS-23 22 890 zu entnehmen. Die nachfolgend als Verstellpumpe bezeichnete motorabhängige Pumpe 3 steht über eine Steuerleitung 26 mit einem Abwägeventil in Verbindung. Dieses Abwägeventil 27 ist zwischen die beiden Zylinderleitungen 18 und 20 eingebaut und verbindet den jeweils wirksamen Druckraum 21 oder 22 des Arbeitszylinders 23 mit dem hydraulisch beaufschlagbaren Verstellglied der Verstellpumpe.

Der Öffnungsquerschnitt der Zulaufsteuerkanten 12 und 13 des Lenkventils 1 bildet einen Strömungsquerschnitt, durch den in der gezeichneten Neutralstellung von der Notlenkpumpe 4 ein in den Leitungen 7, 8 und 10 wirkender Steuerdruck aufgebracht werden muß. Dieser Steuerdruck ist so ausgelegt, daß sich zwischen der Leitung 10 und der Steuerleitung 26 eine Druckdifferenz von ca. 12 bis 15 bar einstellt, die als Steuersignal auf das Verstellglied wirkt. Der Förderhub der Verstellpumpe 3 stellt sich dabei so ein, daß der Förderstrom die Druckdifferenz von 12 bis 15 bar aufrechterhält. Durch die Steuerleitung 26 und eine weitere Steuerleitung 28 ist hierbei angedeutet, daß diese Druckdifferenz als Steuerdruck zur Abregelung der Fördermenge der Verstellpumpe 3 dient. Die Steuerleitungen 26 und 28 stehen in bekannter Weise mit den beiden beaufschlagbaren Seiten der Schwenkscheibe in Verbindung.

In der Neutralstellung des Lenkventils 6 liefert daher die Notlenkpumpe einen Pilotstrom, der nach passieren der verengten Öffnungsquerschnitte der Zulaufsteuerkanten 12, 13 über die Rücklaufsteuerkanten 14, 15 und eine Rücklaufnut 30 zum Behälter 6 abströmen kann.

In einer Lenkstellung kann die Notlenkpumpe 4 im normalen Arbeitsbereich der Hilfskraftlenkung den benötigten Förderstrom alleine aufbringe, solange der Steuerdruck oberhalb der genannten 10 bis 15 bar liegt. Werden jedoch bei verhältnismäßig geringen Fahrgeschwindigkeiten enge Kurven durchfahren, so fällt bei hohen Lenkgeschwindigkeiten der Steuerdruck durch den hohen Ölstrombedarf ab. Zur Deckung dieses hohen Ölstrombedarfes wird vorteilhaft der Förderstrom der Verstellpumpe 3 eingespeist. Dies geschieht auf folgende Weise: Angenommen, das untere Teil des Lenkventils 1 wird nach rechts verstellt, so vergrößert sich der Öffnungsquerschnitt an den Zulaufsteuerkanten 12 bei gleichzeitiger Verengung des Öffnungsquerschnitts der Rücklaufsteuerkanten 14. Dadurch wird der Druckabfall zwischen der Zulaufnut 11 und der Zylindernut 16 geringer, d. h. die Druckdifferenz zwischen der Leitung 10 und der Steuerleitung 26 wird geringer. Dieser Druckabfall wird der Verstellpumpe 3 über den Leitungszweig 7 und die Steuerleitung 28 einerseits sowie über die Leitung 18, das Abwägeventil 27 und die Steuerleitung 26 andererseits signalisiert, deren Verstellglied daraufhin durch Federkraft in Richtung mehr Fördermenge ausschwenkt. Die Verstellpumpe 3 und die Notlenkpumpe 4 liefen nunmehr einen Ölstrom, der über die Zylinderleitung 18 in den Druckraum 21 strömt und somit dessen augenblicklichem Aufnahmevermögen entspricht. Steigt die Druckdifferenz an, so bedeutet dies eine Verringerung des Ölstrombedarfes. Dieser Anstieg der Druckdifferenz wird, wie beschrieben, auf die Verstellpumpe 3 übertragen. Das Verstellglied der Verstellpumpe schwenkt daraufhin, je nach Druckhöhe, wieder zurück auf kleinere Fördermenge oder in die Nullhubstellung. Das bei diesem Lenkvorgang aus dem Druckraum 22 ausgeschobene Ölvolumen kann über die Zylinderleitung 20, die Zylindernut 17, die weit geöffneten Rücklaufsteuerkanten 15, eine Bohrung 31, eine weitere Bohrung 32 und über die Rücklaufnut 30 zum Behälter 6 abströmen.

Im Stand des Fahrzeuges wird der zum Lenken erforderliche Förderstrom von der Verstellpumpe 3 alleine aufgebracht. Das in den Leitungszweig 8 eingesetzte Rückschlagventil 25 verhindert dabei ein Abfließen von Drucköl über die Notlenkpumpe 4

Bei einem plötzlichen Ausfall der Verstellpumpe 3 während der Fahrt sichert dagegen das in den Leitungszweig 7 eingesetzte Rückschlagventil 24 einen Ölverlust über die Verstellpumpe 3. In diesem Falle übernimmt die Notlenkpumpe 4 ihre zusätzliche Notlenkfunktion und erlaubt es, das Fahrzeug aus dem Verkehr zu ziehen.

Bezugszeichen

1 Lenkventil
2 Antriebsmotor
3 Verstellpumpe
4 Notlenkpumpe
5 Rad
6 Behälter
7 Leitungszweig
8 Leitungszweig
9
10 Gemeinsame Druckleitung
11 Zulaufnut
12 Zulaufsteuerkanten
13 Zulaufsteuerkanten
14 Rücklaufsteuerkanten
15 Rücklaufsteuerkanten
16 Zylindernut
17 Zylindernut
18 Zylinderleitung
19
20 Zylinderleitung
21 Druckraum
22 Druckraum
23 Arbeitszylinder
24 Rückschlagventil
25 Rückschlagventil
26 Steuerleitung
27 Abwägeventil
28 Steurleitung
29
30 Rücklaufnut
31 Bohrung
32 Bohrung

**Ansprüche**

1. Hydraulische Hilfskraftlenkung für Kraftfahrzeuge, mit einem durch das Lenkhandrad betätigbaren, in Neutralstellung durchströmten Lenkventil (1), einem Arbeitszylinder (23), einer durch den Fahrzeugmotor angetriebenen ersten Pumpe (3) sowie einer fahrabhängig angetriebenen zweiten Pumpe (Notlenkpumpe 4), die einen konstanten Ölstrom liefert und bei einem Ausfall der ersten Pumpe die Ölversorgung übernimmt, gekennzeichnet, durch folgende Merkmale :

die erste Pumpe (3) ist eine Verstellpumpe ;

das Lenkventil (1) weist in der Neutralstellung einen Öffnungsquerschnitt der Zulaufsteuerkanten (12, 13) auf, der bei dem für Notlenkbetrieb erforderlichen Förderstrom der zweiten Pumpe (Notlenkpumpe 4) auf den für die Abregelung der Verstellpumpe (3) erforderlichen Steuerdruck ausgelegt ist ;

die Verstellpumpe (3) ist über ein Abwägeventil (27) und eine Steuerleitung (26) mit dem jeweils wirksamen Druckraum (22 bzw. 23) des Arbeitszylinders (23) verbunden.

2. Hilfskraftlenkung nach Anspruch 1, dadurch gekennzeichnet, daß die den Minimalquerschnitt bildenden Zulaufsteuerkanten (12, 13) so ausgebildet sind, daß mit dem Betätigungsweg des Lenkventils (1) beim Schließen des Drosselquerschnitts der einen Zulaufsteuerkante (12 oder 13) der Steuerquerchnitt der Rücklaufsteuerkante (14 bzw. 15) entsprechend der Querschnittsverringerung an der Zulaufsteuerkante (12 oder 13) vergrößert und beim Schließen der Zulaufsteuerkante (12 oder 13) die Rücklaufsteuerkante (14 bzw. 15) über den weiteren Verstellweg stetig vergrößert wird.

**Claims**

1. A hydraulic power steering unit for motor vehicles having a control valve (1) passed through in neutral position and actuated by a steering wheel, a booster cylinder (23), a first pump (3) driven by the vehicle engine, as well as a vehicle driven second pump (emergency steering pump 4) supplying a constant oil flow and taking over the oil supply upon failure of the first pump, characterized in that :

the first pump (3) is a variable displacement pump ;

the control valve (1) shows in neutral position an opening cross section of the control port edges (12, 13) rated to the control pressure necessary for controlling the variable displacement pump (3) based on the discharge flow of the second pump (emergency steering pump 4) required for emergency steering operations ;

the variable displacement pump (3) is connected to the individual effective pressure chambers (22 or 21) of operating cylinder (23) via a comparator valve (27) and a control line (26).

2. Power steering according to claim 1, characterized in that the feed port control edges (12, 13) forming the minimum cross section are so designed, that upon actuation of control valve (1) while closing orifice cross section of one of the feed port edges (12 or 13) the control cross section of the return port control edge (14 or 15) is increased according to the cross section reduction on the feed port control edge (12 or 13) an when closing the feed port control edge (12 or 13) the return port control edge (14 or 15) is continuously increased via the further variable displacement stroke.

## Revendications

1. Direction à assistance hydraulique pour les véhicules automobiles, avec une soupape de braquage (1) commandable par le volant et dans laquelle le fluide circule au point mort, un vérin (cylindre de travail) (23), une première pompe (3) entraînée par le moteur du véhicule ainsi qu'une deuxième pompe (pompe de secours pour direction) (4) entraînée en fonction de la vitesse (de roulage) qui fournit un débit d'huile constant et assure l'alimentation en huile quand la première pompe tombe en panne, caractérisée par les critères suivants :

la première pompe (3) a une cylindrée variable ;

la soupape de braquage (1) possède, au point mort, une section d'ouverture des arêtes de commande d'admission (12, 13) et dans laquelle le débit de la deuxième pompe (pompe de braquage de secours (4)) nécessaire pour le service de braquage de secours a une valeur égale à la pression de commande nécessaire à la régulation de la pompe à cylindrée variable (3) ;

la pompe à cylindrée variable (3) est reliée au compartiment momentanément sous pression (22 ou 21) du vérin (cylindre de travail) (23) par une soupape d'adaptation (27) et une conduite de commande (26).

2. La direction à assistance hydraulique selon la revendication 1, caractérisée par le fait que les arêtes de commande de l'admission (12, 13) qui composent la section minimale ont une configuration telle que, lors de la course de déplacement de la soupape de braquage (1) pendant la fermeture de la section d'étranglement par une arête de commande d'admission (12 ou 13), la section de commande formée par l'arête de retour (14 ou 15) augmente en fonction de la diminution de section par l'arête de commande d'admission (12 ou 13), tandis que lors de la fermeture de cette arête de commande d'admission (12 ou 13), l'orifice formé par l'arête de commande du retour (14 ou 15) augmente continuellement pendant la course de déplacement restante.

# FIG. 1

# FIG.2